Europäisches Patentamt

European Patent Office

Office européen des brevets

(11) Veröffentlichungsnummer: **0 007 117**
**B1**

(12) **EUROPÄISCHE PATENTSCHRIFT**

(45) Veröffentlichungstag der Patentschrift:
**06.01.82**

(51) Int. Cl.³: **G 05 D 16/06,** F 16 K 17/06

(21) Anmeldenummer: **79200069.7**

(22) Anmeldetag: **09.02.79**

(54) **Reduzierventil.**

(30) Priorität: **08.07.78 DE 2830147**

(43) Veröffentlichungstag der Anmeldung:
**23.01.80 Patentblatt 80/2**

(45) Bekanntmachung des Hinweises auf die Patenterteilung:
**06.01.82 Patentblatt 82/1**

(84) Benannte Vertragsstaaten:
**IT NL**

(56) Entgegenhaltungen:
**DE-B-2 523 845**

(73) Patentinhaber: **Schulz + Rackow GmbH,
Industriestrasse 8, D-3554 Gladenbach (DE)**

(72) Erfinder: **Hennecke, Ernst, Schöne Aussicht 1,
D-3554 Gladenbach 1 (DE)**

(74) Vertreter: **Olbricht, Karl Heinrich, Dipl.-Phys., Am
Weinberg 15, D-3551 Niederweimar (DE)**

BUNDESDRUCKEREI BERLIN

## Reduzierventil

Die vorliegende Erfindung betrifft ein Reduzierventil mit einem in seinem Gehäuse geführten Betätigungsgestänge für das Schließglied eines Hauptventils, das an einem Druckgasbehälter angebracht und dem in einem Gasentnahmeanschluß ein Zweitventil nachgeordnet ist, dessen Verschlußstück mit dem Betätigungsgestänge durch einen Steuerhebel mit Bewegungsspiel gekoppelt ist, der in einer membranbegrenzten Kammer des Gehäuses schwenkbar gelagert und mit einem starren, von einer Feder belasteten Mitnehmerarm gelenkig verbunden ist.

Ein solches Reduzierventil ist aus der DE-B-2 523 845 an sich bekannt. Hierbei sind zur Kopplung mit dem Betätigungsgestänge zwei Elemente vorhanden, die miteinander in direkter oder indirekter Wirkungsverbindung stehen. Zwischen Steuerhebel und Mitnehmerarm ist die Feder so angeordnet, daß ihre Kraftrichtung wenigstens annähernd parallel zur Bewegungsrichtung des Verschlußstücks verläuft. Außerdem ist der Mitnehmerarm mit dem Steuerhebel durch ein Drehgelenk verbunden, das oberhalb des Schwenklagers angeordnet ist. Diese beiden Maßnahmen zusammen bedingen, daß die an sich gut funktionierende Steuerung des Zweitventils mit Doppelgelenk am Steuerhebel einen für die praktische Verwertung zu hohen Konstruktions- und Fertigungsaufwand erfordert. Herstellung und Montage der Teile schlagen daher mit ungünstigen Kosten zu Buche.

Aufgabe der Erfindung ist es, unter Überwindung der Nachteile des Standes der Technik ein Reduzierventil der genannten Art mit möglichst wirtschaftlichen Mitteln weiter zu verbessern und zu vereinfachen, wobei trotz gesenkter Fertigungs- und Montagekosten die exakte Einstellung und zuverlässige Schließung des Zweitventils in großem Regelbereich gewährleistet werden bzw. bleiben soll.

Bei einem Reduzierventil der eingangs genannten Art ist erfindungsgemäß vorgesehen, daß das obere Ende des Steuerhebels den Mitnehmerarm durchsetzt und einen Gewindeansatz aufweist, mit dem ein Anschlagelement schraubt, das den Mitnehmerarm übergreift und an diesem durch die Feder kraftschlüssig und einstellbar gelenkig gehalten ist. Gegenüber früheren Reduzierventilen ergibt sich dadurch eine wesentliche Vereinfachung mit beträchtlichen Vorteilen. Es ist nämlich nicht mehr notwendig, die Belastungsfeder zwischen Steuerhebel und Mitnehmerarm vorzusehen, so daß sich der Aufbau überraschend verbilligt. Auch braucht die Verbindungsstelle nicht als Drehgelenk ausgebildet zu sein; vielmehr genügt es, wenn sie gelenkig-einstellbar ist, um den Stellwegen und Toleranzen am Schaltgestänge zwischen Hochdruck- und Niederdruckmembran in einfacher und sicherer Weise Rechnung zu tragen. Auch wenn im Hochdruckraum nur ein geringer Druck herrscht, etwa bei nahezu leerem Gasbehälter, ist daher die einwandfreie Steuerung des Zweitventils mit verblüffend einfachen Mitteln gewährleistet.

Gemäß einer Ausgestaltung der Erfindung sitzt die als Druckfeder ausgebildete Feder auf dem Schaft des Steuerhebels und stützt sich an einer Schulter seines Mittelstücks ab. Bevorzugt ist das Anschlagelement eine Mutter mit einem den Mitnehmerarm durchsetzenden Buchsenteil. Letzterer kann ein Flachstück sein, das steuerhebelseits ein Durchgangsloch und am anderen Ende eine Gabel hat. Alle diese Maßnahmen tragen zur konstruktiven Vereinfachung und damit zur Senkung der Herstellungs- und Montagekosten bei. Außerdem ist die gelenkige Verbindung zwischen Steuerhebel und Mitnehmerarm rasch und präzise so einstellbar, wie es der Anwendungsfall erfordert. Wenn nötig, ist auch eine Nachjustierung jederzeit möglich. Die endgültige Einstellung kann im Bedarfsfalle gesichert werden, beispielsweise mittels eines Wachs- oder Lacktropfens.

Der Steuerhebel kann ferner gemäß einer Weiterbildung der Erfindung mittels Zapfen in einem mit dem Gehäuse einstückigen Lager schwenkbar gelagert sein, das vorzugsweise um den bzw. die Zapfen herumgestaucht wird.

Ein Reduzierventil, wobei das der Verbindungsstelle mit dem Steuerhebel gegenüberliegende gegabelte Ende des Mitnehmerarms am Schaft der Niederdruckmembran-Schaltstange zwischen Flanschen sitzt und wobei der Endansatz des Schaltstangenschaftes die lichte Weite eines inneren Kragens am Haltekörper für Hochdruck-Membran und -Membranteller radial überragt, die von einem Gewindebolzen durchsetzt sind, kann erfindungsgemäß so ausgeschaltet sein, daß der Haltekörper als einstückige, mit dem Gewindebolzen schraubende Hutmutter und der Endansatz in Form von Spreiznasen ausgebildet ist, die einmalig in den Kragen einführbar sind und ihn gespreizt nach Art von Widerhaken untergreifen. Zweckmäßig kann die Schaltstange mit Endansatz oder Spreiznasen aus Kunststoff bestehen und insbesondere als Spritz- oder Preßteil ausgebildet sein. Auch diese Maßnahmen fördern die Vereinfachung und Verbilligung des Reduzierventils bei Aufrechterhaltung der sicheren Funktion.

Ausführungsbeispiele der Erfindung werden im folgenden anhand der Zeichnung erläutert. Darin zeigt

Fig. 1 eine Schnittansicht eines Reduzierventils nach der Erfindung in Einschaltstellung,

Fig. 2 eine Ausschnittvergrößerung einer Schnittansicht mit wesentlichen Steuerungsteilen eines erfindungsgemäßen Reduzierventils in Ausschaltstellung und

Fig. 3 eine entsprechende Ausschnittvergrößerung einer Schnittansicht einer abgewandelten Ausführungsform in Einschaltstellung des Hauptventils.

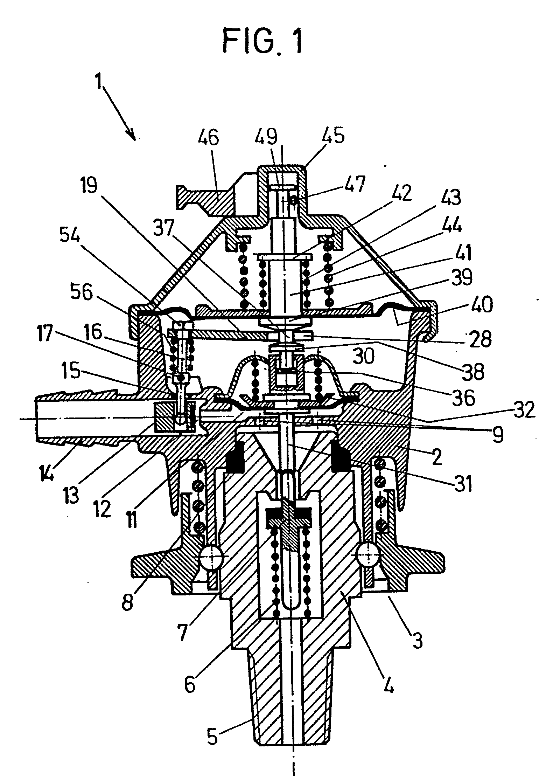

Das in seiner Gesamtheit mit 1 bezeichnete Reduzierventil gemäß Fig. 1 hat ein Gehäuse 2 mit Aufsteckkupplung 3 zur Anbringung am Körper eines Hauptventils 4, der über einen Gewindeanschluß 5 mit einem Druckgasbehälter, z. B. einer Propan- oder Butan-Flasche, verbunden ist. Eine Ventilfeder 6 im zentrischen Durchlaß des Ventilkörpers belastet ein Ventilstück 7 auf den Ventilsitz zu. Eine Ringdichtung 8 bewirkt eine druckdichte Verbindung zum aufgesteckten Gehäuse 2, das am Boden Durchbrüche 9 aufweist. Sie stellen die Strömungsverbindung zu einem Hochdruckraum 10 her, der von einer Hochdruckmembran 11 abgeschlossen ist. Ein seitlicher Auslaß des Hochdruckraums 10 ist durch ein Zweitventil 12 abschließbar, dessen Verschlußstück 13 innerhalb eines Gasentnahmeanschlusses 14 begrenzt beweglich ist. Aus dem Gaskanal des Anschlusses 14 führt ein Durchlaß 15 zu einer oberhalb der Hochdruckmembran 11 befindlichen Kammer 30.

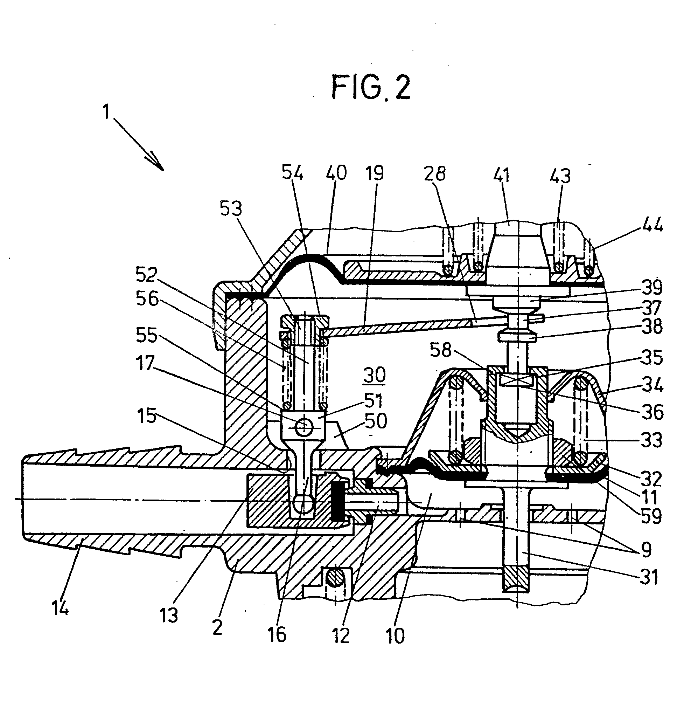

Im Durchlaß 15 ist ein Steuerhebel 16 angeordnet, der mittels Schwenklagerzapfen 17 in einem Lager 50 (Fig. 2) des Gehäuses 2 pendelbar gelagert ist. Am oberen Ende ist der Steuerhebel 16 gelenkig und kraftschlüssig mit einem Mitnehmerarm 19 verbunden, der als elastisches Flachstück ausgebildet ist.

Der Steuerhebel 16 hat ein Mittelstück 51, das die Zapfen 17 trägt, beispielsweise in Form eines quer angeordneten Durchgangsstiftes. Der Schaft 52 des Steuerhebels 16 weist an seinem oberen Ende einen Gewindeansatz 53 auf, mit dem eine Mutter 54 schraubt. Letztere durchsetzt ein Durchgangsloch des Mitnehmerarms 19, vorzugsweise mit einem Buchsenteil. Zwischen einer am Mittelstück 51 vorgesehenen Schulter 55 und dem Mitnehmerarm 19, welcher von der auf den Gewindeansatz 53 aufgeschraubten Mutter 54 gehalten ist, sitzt eine Druckfeder 56, die den Mitnehmerarm 19 an die Mutter 54 andrückt.

Am gegenüberliegenden Ende 28 ist der Mitnehmerarm 19 gegabelt, so daß er einen Schaft 37 eines Betätigungsgestänges beiderseits umgreift. Der Schaft 37 ist mit einer Schaltstange 41 starr verbunden, die einen Flansch 39 aufweist, an dessen Oberseite eine Niederdruckmembran 40 von einer Ventilfeder 43 und einer Regelfeder 44 gehalten ist. Das Gabelende 28 sitzt zwischen dem oberen Flansch 39 und einem unteren Flansch 38, so daß eine gleitbewegliche Mitnahme bei der Auf- und Abbewegung des Gestänges 37/41 gewährleistet ist. Die Ventilfeder 43 stützt sich an einem Bund 42 ab. Das obere, abgesetzte Ende der Schaltstange 41 ragt in eine Nase 45 des Gehäuses 2, die von einem Schaltstift 47 des Exzenterhebels 46 quer durchsetzt ist. Zeigt dieser in zum Gasentnahmeanschluß 14 entgegengesetzte Richtung, so hält der Schaltstift 47 das Betätigungsgestänge 41/31 in der oberen oder Ausschaltstellung. Wird der Exzenterhebel 46 zum Gasentnahmeanschluß 14 hin umgelegt, so ist die Einschalt-Stellung (Fig. 1) erreicht.

Das untere Ende des Schaftes 37 weist nämlich einen Endansatz 36 auf, welcher die lichte Weite eines Kragens 35 radial überragt, der Bestandteil eines Haltekörpers 58 ist. Mit letzterem ist die Hochdruckmembran 11 samt Membranteller 32 an einem Stift oder Stößel 31 befestigt, der zur Betätigung des Ventilstücks 7 am Hauptventil 4 dient, um dieses zu öffnen bzw. durch Abheben des Stößels 31 unter dem auf die Membran 11 wirkenden Behälterdruck zu schließen.

Im Beispiel der Fig. 2 ist der Haltekörper 58 einstückig mit dem Stößel 31, und die Festlegung des Membrantellers 32 sowie der Hochdruckmembran 11 geschieht mittels einer Mutter 59, innerhalb einer Membranfeder 33 und unterhalb eines letztere haltenden Stützteils 34 angeordnet ist.

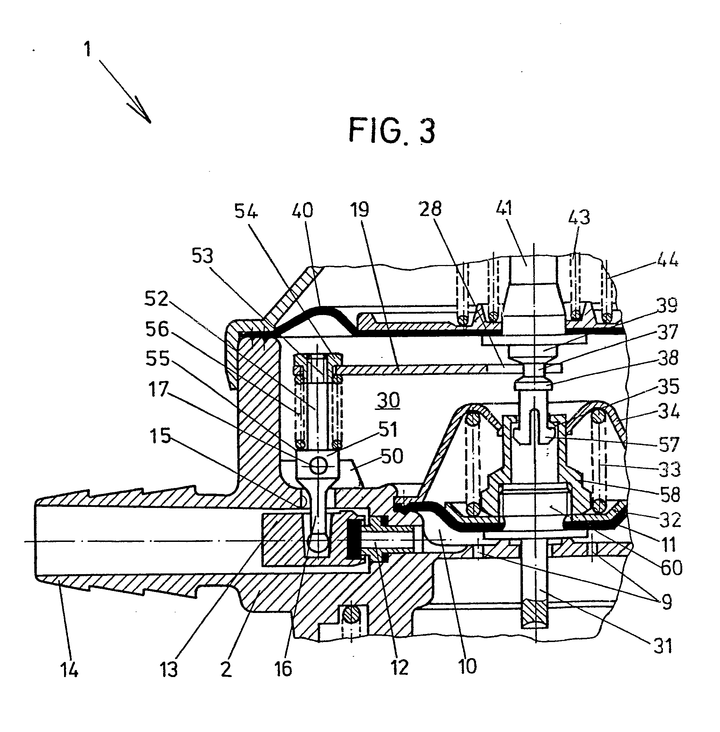

Im Ausführungsbeispiel der Fig. 3 ist der Stößel 31 einstückig mit einem Gewindebolzen 60, auf den der als Hutmutter ausgebildete Haltekörper 58 aufgeschraubt ist. In beiden Fällen ist eine druckdichte Befestigung des Betätigungsgestänges an der Hochdruckmembran 11 gewährleistet.

Das obere Ende des Haltekörpers 58 bildet den nach innen gerichteten Kragen 35, welcher als oberer Anschlag für das untere Ende des Schaftes 37 dient. Dies ist im Ausführungsbeispiel der Fig. 2 der als Flachstück ausgebildete Endansatz 36, welcher in einen Schlitz am Kragen 35 einführbar ist und nach Verdrehung an ihm zum Anschlag kommen kann, während gemäß Fig. 3 der Schaft 37 sich nach unten in Form von Spreiznasen 57 fortsetzt, die nach einmaliger Verformung beim axialen Einführen in den Kragen 35 diesen untergreifen.

Bei der in Fig. 2 gezeichneten Ausschalt-Stellung ist die Niederdruckmembran 40 etwas angehoben und das Gabelende 28 des Mitnehmerarms 19 zwischen den Flanschen 38, 39 entsprechend mitgenommen, wobei infolge der Anschlagstellung des Endansatzes 36 am Kragen 35 auch die Membran 11 durch das Gestänge nach oben in die Auschalt-Stellung gezogen und das Hauptventil 4 somit geschlossen ist. Da der Mitnehmerarm 19 starr ist, kann diese Aufwärtsbewegung seines Gabelendes 28 nur stattfinden, indem das andere Ende unter Anschlag an der Mutter 54 als Kippunkt die Druckfeder 56 nach außen niederdrückt. Hierbei kommt unter dem Steuerhebel 16 das Verschlußstück 13 am Zweitventil 12 zur Anlage, so daß es schließt.

In der Arbeits-Stellung von Fig. 3 herrscht im Hochdruckraum 10 nur ein geringer Druck, so daß die Niederdruckmembran 40 in einer unteren Lage steht. Entsprechend ist die Schaltstange 41 mit den Flanschen 38, 39 heruntergefahren, wodurch das Gabelende 28 des Mitnehmerarms 19 mit abgesenkt und dieser entlastet ist. Infolgedessen wirkt die Baugruppe 16, 52/53, 54, 19 wie ein (noch) starrer Winkelhebel. Das Verschlußstück 13 wird in Abhängigkeit vom Verbrauchsdruck im Gasentnahmeanschluß 14 durch den Steuerhebel 16 freigegeben, wodurch das Zweitventil 12 nach Bedarf öffnet.

In jedem Falle schließt das Ventil 12/13 beim Hochgehen der Schaltstange 41, bevor deren Endansatz 36 bzw. die Spreiznasen 57 am Kragen 35 zum Anschlag kommen. Dazu ist die Mutter 54 auf dem Gewindeansatz 53 des Schaftes 52 so einstellbar, daß bei bereits oder noch geschlossenem Zweitventil 12/13 das erforderliche Minimalspiel zwischen Kragen 35 und Endansatz 36 bzw. Spreiznasen 57 unter allen Umständen vorhanden ist. So ist sichergestellt, daß das Zweitventil 12/13 auch dann schließen kann, wenn die Hochdruckmembran 11 bei kleinstem Flaschendruck in ihrer tiefsten Lage steht, also bei voll geöffnetem Hauptventil 4. Da nun der Steuerhebel 16 sich bereits in der Schließstellung befindet, kann ein Abschalten durch Anheben des Schaltgestänges 37/41 nur erfolgen, weil erfindungsgemäß der starre Mitnehmerarm 19 dank der Druckfeder 16 an der Gelenkverbindungsstelle 53, 54 nachgiebig gelagert ist.

Legende PH 284

| | |
|---|---|
| 1 | Reduzierventil |
| 2 | Gehäuse |
| 3 | Aufsteckkupplung |
| 4 | Hauptventil |
| 5 | Gewindeanschluß |
| 6 | Ventilfeder |
| 7 | Ventilstück |
| 8 | Ringdichtung |
| 9 | Durchbrüche |
| 10 | Hochdruckraum |
| 11 | Hochdruckmembran |
| 12 | Zweitventil |
| 13 | Verschlußstück |
| 14 | Gasentnahmeanschluß |
| 15 | Durchlaß |
| 16 | Steuerhebel |
| 17 | Schwenklagerzapfen |
| 19 | Mitnehmerarm |
| 21 | Druckfeder |
| 28 | Gabelende |
| 30 | Kammer |
| 31 | Stift/Stößel |
| 32 | Membranteller |
| 33 | Membranfeder |
| 34 | Stützteil |
| 35 | Kragen |
| 36 | Endansatz |
| 37 | Schaft |
| 38, 39 | Flansche |
| 40 | Niederdruckmembran |
| 41 | Schaltstange |
| 42 | Bund |
| 43 | Membranventilfeder |
| 44 | Regelfeder |
| 45 | Nase |
| 46 | Exzenterhebel |
| 47 | Schaltstift |
| 48 | Schrägfläche |
| 49 | Kopf |
| 50 | Lager |
| 51 | Mittelstück |
| 52 | Schaft |
| 53 | Gewinde(ansatz) |
| 54 | Mutter |
| 55 | Schulter |
| 56 | Druckfeder |
| 57 | Spreiznasen |
| 58 | Haltekörper |
| 59 | Mutter |
| 60 | Gewindebolzen |

**Patentansprüche**

1. Reduzierventil mit einem in seinem Gehäuse (2) geführten Betätigungsgestänge (31, 58; 37, 41) für das Schließglied (7) eines Hauptventils (4), da das an einem Druckgasbehälter angebracht und dem in einem Gasentnahmeanschluß (14) ein Zweitventil (12) nachgeordnet ist, dessen Verschlußstück (13) mit dem Betätigungsgestänge durch einen Steuerhebel (16) mit Bewegungsspiel gekoppelt ist, der in einer membranbegrenzten Kammer (30) des Gehäuses schwenkbar gelagert und mit einem starren, von einer Feder (56) belasteten Mitnehmerarm (19) gelenkig verbunden ist, dadurch gekennzeichnet, daß das obere Ende des Steuerhebels (16) den Mitnehmerarm (19) durchsetzt und einen Gewindeansatz (53) aufweist, mit dem ein Anschlagelement (54) schraubt, das den Mitnehmerarm (19) übergreift und an dem dieser durch die Feder (56) kraftschlüssig und einstellbar gelenkig gehalten ist.

2. Reduzierventil nach Anspruch 1, dadurch gekennzeichnet, daß die als Druckfeder ausgebildete Feder (56) auf dem Schaft (52) des Steuerhebels (16) sitzt und sich an einer Schulter (55) seines Mittelstücks (51) abstützt.

3. Reduzierventil nach Anspruch 1 oder 2, dadurch gekennzeichnet, daß das Anschlagelement eine Mutter (54) mit einem den Mitnehmerarm (19) durchsetzenden Buchsenteil ist.

4. Reduzierventil nach einem der Ansprüche 1 bis 3, dadurch gekennzeichnet, daß der Mitnehmerarm (19) ein Flachstück ist, das steuerhebelseits ein Durchgangsloch und am anderen Ende (28) eine Gabel hat.

5. Reduzierventil nach wenigstens einem der Ansprüche 1 bis 4, dadurch gekennzeichnet, daß der Steuerhebel (16) mittels Zapfen (17) in einem mit dem Gehäuse (2) einstückigen Lager (50) schwenkbar gelagert ist.

6. Reduzierventil insbesondere nach wenigstens einem der Ansprüche 1 bis 5, wobei das der Verbindungsstelle mit dem Steuerhebel gegenüberliegende gegabelte Ende des Mitnehmerarms am Schaft der Niederdruckmembran-Schaltstange zwischen Flanschen sitzt und wobei der Endansatz des Schaltstangenschaftes die lichte Weite eines inneren Kragens am Haltekörper für Hochdruck-Membran und -Membranteller radial überragt, die von einem Gewindebolzen durchsetzt sind, dadurch gekennzeichnet, daß der Haltekörper (58) als einstückige, mit dem Gewindebolzen (60) schraubende Hutmutter und der Endansatz in Form von Spreiznasen (57) ausgebildet ist, die einmalig in den Kragen (35) einführbar sind und ihn gespreizt nach Art von Widerhaken untergreifen.

7. Reduzierventil nach Anspruch 6, dadurch gekennzeichnet, daß die Schaltstange (41) mit Endansatz (36) oder Spreiznasen (57) aus Kunststoff besteht und insbesondere als Spritz- oder Preßteil ausgebildet ist.

### Claims

1. Reducing valve comprising rod means (31, 58; 37, 41) guided in its casing (2) for actuating the plunger (7) of a main valve (4) which is attached to a compressed gas container and in series to which there is, in a gas outlet (14), a second valve (12) whose rocker (13) is clearance-coupled to the rod means by a control lever (16) that is pivotably supported in a diaphragm-defined chamber (30) of the casing and is articulated to a rigid slaving arm (19) loaded by spring means (56), characterized in that the upper end of said control lever (16) passes through said slaving arm (19) and includes a threaded portion (53) joined to stop means (54) which extend over said slaving arm (19) and to which the latter is positively and adjustably linked by means of said spring (56).

2. Rducing valve according to claim 1, where in said spring (56) is a compression spring situated on the shaft (52) of said control lever (16) and engaged to a shoulder (55) of the latter's central portion (51).

3. Reducing valve according to claim 1 or 2, where in said stop means is a nut (54) comprising a sleeve portion extending through said slaving arm (19).

4. Reducing valve according to any one of claims 1 to 3, wherein said slaving arm (19) is a flat piece having a throughhole adjacent said control lever and a forked end (28) opposite thereto.

5. Reducing valve according to any one of claims 1 to 4, wherein said control lever (16) is pivotably supported by means of a journal (17) in a bearing (50) that is integral with said casing (2).

6. Reducing valve, in particular according to at least one of claims 1 to 5, with the forked end (28) that is opposite to said control lever connection being arranged between flanges (38, 39) on the shaft (37) of the actuating stem (41) of the low pressure diaphragm (40), a stud of said actuating stem (41) radially extending beyond the clear diameter of an inner collar (35) at a rest body (58) supporting said pressure diaphragm and its disk through which a threaded bolt (60) passes, characterized in that said rest body (58) is an integral cap nut thread-engaged to said threaded bolt (60) and in that said stud comprises strutting lugs (57) adapted to be irretrievably introduced into said collar (35) so as to underhook it in the manner of barbs.

7. Reducing valve according to claim 6, wherein said actuating stem (41) including its stud (36) or strutting lugs (57) is made of plastic material and is, in particular, a moulded or pressed article.

### Revendications

1. Soupape de réduction comportant un mécanisme de commande (31, 58; 37, 41) guidé dans son logement (2) pour l'organe de fermeture (7) d'une soupape principale (4) qui est adaptée à un réservoir de gaz comprimé et en aval de laquelle est montée, dans un raccord de prise de gaz (14), une soupape secondaire (12) dont la pièce de fermeture (13) est accouplée au mécanisme de commande par un levier de commande (16) qui peut se déplacer librement, qui est monté de façon à pouvoir pivoter dans une chambre (30) du logement délimitée par une membrane et qui est articulé à un bras d'entraînement (19) rigide sollicité par un ressort (56), caractérisée en ce que l'extrémité supérieure du levier de commande (16) passe à travers le bras d'entraînement (19) et comporte un embout fileté (53) sur lequel vient se visser un élément de butée (54) venant s'engager sur le bras d'entraînement (19) et sur lequel ce dernier reste articulé solidairement en force avec la possibilité d'être réglé à l'intervention du ressort (56).

2. Soupape de réduction suivant la revendication 1, caractérisée en ce que le ressort (56) réalisé sous forme d'un ressort à pression repose sur la tige (52) du levier de commande (16) et vient prendre appui sur un épaulement (55) de sa pièce centrale (51).

3. Soupape de réduction suivant la revendication 1 ou 2, caractérisé en ce que l'élément de butée est un écrou (54) comportant une partie formant douille dans laquelle passe le bras d'entraînement (19).

4. Soupape de réduction suivant une des revendications 1 à 3, caractérisée en ce que le bras d'entraînement (19) est une pièce plate comportant un trou de passage du côté du levier de commande et une fourche, à l'autre extrémité (28).

5. Soupape de réduction suivant au moins une des revendications 1 à 4, caractérisée en ce que le levier de commande (16) est monté de façon à pouvoir pivoter, au moyen d'un pivot (17), dans un palier (50) réalisé d'une seule pièce avec le logement (2).

6. Soupape de réduction, en particulier, suivant au moins une des revendications 1 à 5, l'extrémité du bras d'entraînement qui est réalisée en forme de fourche et qui est située à l'opposé du point d'assemblage avec le levier de commande, prenant appui entre des brides sur la tige de la tringle de commande d'une membrane à basse pression, tandis que l'embout de cette tige ressort radialement audelà du diamètre intérieur d'un collet intérieur sur le corps de retenue prévu pour la membrane à haute pression et le disque de celle-ci, un boulon fileté passant à travers cette membrane et ce disque, caractérisée en ce que le corps de retenue (58) est réalisé sous forme d'un écrou borgne d'une seule pièce venant se visser sur le boulon fileté (60), tandis que l'embout précité est réalisé sous forme de tenons expansibles (57) qui peuvent être introduits d'une fois dans le collet (35) en dessous duquel ils viennent s'engager à la manière de crochets après expansion.

7. Soupape de réduction suivant la revendication 6, caractérisée en ce que la tringle de commande (41) pourvue de l'embout (36) ou des tenons expansibles (57) est réalisée en matière synthétique, en particulier, sous forme d'une pièce moulée par injection ou par compression.

# FIG. 1

# FIG.2

1

# FIG. 3